(19) Europäisches Patentamt
European Patent Office
Office européen des brevets

(11) **EP 1 714 725 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
***B23H 3/02*** *(2006.01)*

(21) Anmeldenummer: 05008377.3

(22) Anmeldetag: **18.04.2005**

(54) **Verfahren und Schaltanordnung zur elektrochemischen Metallbearbeitung**

Method and power supply for electrochemical machining

Méthode et circuit pour usinage par électrochimie.

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**25.10.2006 Patentblatt 2006/43**

(73) Patentinhaber:
• **Mahler, Wilhelm**
  **27383 Scheessel (DE)**
• **Kröger, Karl-Heinz**
  **27383 Scheessel (DE)**

(72) Erfinder:
• **Zaytsev, A.N.**
  **450015 Ufa (RU)**
• **Bezrukov, S.V.**
  **450092 Ufa (RU)**
• **Idrisov, T.R.**
  **450005 Ufa (RU)**
• **Koarev, T.V.**
  **450009 Ufa (RU)**
• **Zaytsev, V.A.**
  **450015 Ufa (RU)**
• **Kröger, Karl-Heinz**
  **27383 Scheessel (DE)**
• **Mahler, Wilhelm**
  **27383 Scheessel (DE)**

(74) Vertreter: **Stornebel, Kai et al**
  **Gramm, Lins & Partner GbR,**
  **Theodor-Heuss-Strasse 1**
  **38122 Braunschweig (DE)**

(56) Entgegenhaltungen:
RU-C1- 2 220 031        US-A- 4 213 834
US-A- 5 242 556        US-A- 5 833 835
US-B1- 6 231 748        US-B1- 6 402 931

**Beschreibung**

Die Erfindung betrifft ein Verfahren zur elektrochemischen Bearbeitung elektrisch leitender Werkstücke aus einer Legierung, Stoffgemisch oder Verbundmaterial aus Komponenten mit unterschiedlichen elektrochemischen Eigenschaften in einem anfänglich neutralen Elektrolyt mit einer Werkzeugelektrode, bei dem hochfrequente Anodenstromimpulse, bevorzugt von geringer Dauer, an einen Elektrodenzwischenraum zwischen dem Werkzeug und dem Werkstück angelegt werden und das Werkzeug eine oszillierende Bewegung auf das Werkstück zu und von dem Werkstück weg ausführt und die Anodenstromimpulse als Impulsgruppe im Zeitpunkt maximaler Annäherung zwischen dem Werkstück und dem Werkzeug aufgebracht werden, mit den Merkmalen des Oberbegriffs des Anspruchs1. Dokument US5,833,835, welches als nächstliegender Stand der Technik anzusehen ist, zeigt ein derartiges Verfahren.

Die Erfindung ist insbesondere für die Bearbeitung hochlegierter Stähle, Legierungen und stromleitende Verbundwerkstoffe aus Komponenten mit wesentlich unterschiedlichen elektrochemischen Eigenschaften geeignet.

Aus der US 5,833,835 ist ein Verfahren zur elektrochemischen Bearbeitung mit bipolaren Stromimpulsen bekannt, wobei sich Impulse mit positiver und negativer Polarität abwechseln. Gemäß diesem Verfahren wird die Spannung der Stromimpulse negativer Polarität beschränkt, um dadurch die Auflösung der Arbeitsoberfläche der Werkzeugelektrode zu vermeiden. Hierzu wird bei der Bearbeitung die Spannung der einzelnen Impulse negativer Polarität von der Polarisationsspannung zum Unterbrechungszeitpunkt des Stromimpulses positiver Polarität sukzessive bis zu derjenigen Spannung abgesenkt, bei welcher eine elektrochemische Auflösung der Arbeitungsoberfläche der Werkzeugelektrode einsetzt. Darüber hinaus wird die Momentanspannung des Stromimpulses positiver Polarität am Sollpunkt gemessen, die Differenz der gemessenen Momentanwerte für jeden folgenden und vorangehenden Impuls berechnet und im Falle eines Vorzeichenwechsels dieser Differenz von Minus nach Plus die Obergrenze und beim nächsten Vorzeichenwechsel von Plus nach Minus die Untergrenze für die Spannung der Stromimpulse negativer Polarität festgelegt. Bei der Bearbeitung wird die Spannung der Stromimpulse negativer Polarität innerhalb dieser Grenzen gehalten und die Bearbeitung mit einem Stromimpuls negativer Polarität abgeschlossen.

Die US 6,402,931 beschreibt ein Verfahren zur elektrochemischen Bearbeitung unter Einsatz eines modulierten elektrischen Umkehrfeldes, bei der die elektrochemische Bearbeitung und Verwendung von negativen Anoden- und positiven Kathodenstromimpulsen ausgeführt wird. Der positive Kathodenstromimpuls wird hierbei vor dem Anodenstromimpuls gegeben, wodurch es möglich wird, bei der elektrochemischen Bearbeitung von leicht passivierbaren Metallen und Legierungen die nötige Oberflächengeometrie und -qualität zu erzeugen.

Die US 5,242,556 beschreibt ein Verfahren zur Bearbeitung mit elektrochemischen Impulsen in einem neutralen Elektrolyten, wobei abwechselnd positive und negative elektrische Stromimpulse angewendet und die Zeitintervalle vom negativen zum positiven Impuls verändert werden.

Die US 6,231,748 beschreibt ein Verfahren und eine Vorrichtung zur elektrochemischen Bearbeitung von stromleitenden Materialien, wobei Arbeits- und Passivierungsspannungsimpulse an die Werkzeugelektrode und das Werkstück angelegt werden. Die Amplitude der Passivierungs-Spannungsimpulse wird sukzessive von null bis zu derjenigen Spannung erhöht, bei der Anodenauflösung des Werkstückmaterials einsetzt. Nach jeder Spannungserhöhung wird der elektrische Widerstand des Elektrodenzwischenraums gemessen. Für die weitere Bearbeitung wird derjenige Spannungswert benutzt, bei dem der elektrische Widerstand des Elektrodenzwischenraums am größten war.

Ein Nachteil dieser Verfahren besteht darin, dass es mit ihnen nur eingeschränkt möglich ist, den Prozess zu regeln, um dadurch eine bestimmte chemische Zusammensetzung der Oberflächenschicht zu schaffen oder die Anodenauflösungsgeschwindigkeiten der Komponenten des zu bearbeitenden Materials zur Gewährleistung einer minimalen Oberflächenrauheit aneinander anzugleichen.

Aus der US 4,213,834 ist ein Verfahren zur elektrochemischen Bearbeitung bekannt, wobei zur Prozessführung bei geringen Elektrodenabständen ein Signal benutzt wird, das die Verzerrung des Spannungsimpulses bei Verwendung einer Stromquelle charakterisiert. Insbesondere wird ein Signal benutzt, das proportional zum Maximalwert der zweiten Ableitung nach der Impulsspannung der Werkzeugelektrode ist. Ein Nachteil dieses Verfahrens besteht darin, dass beim Einsatz von kurzen Stromimpulsen, die kürzer als 500 $\mu$s sind, der Bestimmungsfehler des Signals übermäßig groß wird. Ein weiteres Problem stellt die Bearbeitung von Werkstücken bei Vorhandensein großer, nicht zu bearbeitender Oberflächen dar, durch welche Fremdströme fließen und so den Arbeitsstrom überbrücken können. Das Signal, das die von den Prozessen im Elektrodenzwischenraum hervorgerufene Impulsverzerrung charakterisiert, ist in diesem Falle äußerst schwach.

Weiterhin ist aus der RU 2220031 ein Verfahren zur elektrochemischen Bearbeitung von Titan und Titanlegierungen in Elektrolyten und Einsatz von regelbaren, hochfrequenten, rechteckförmigen Anodenstromimpulsen bekannt, die in Impulspaketen gegeben und mit dem Zeitpunkt der maximalen Annäherung der oszillierenden Werkzeugelektrode mit dem Werkstück synchronisiert werden, wobei die Bearbeitung bei geringen Elektrodenabständen durchgeführt wird.

Auch bei diesem Verfahren besteht der Nachteil darin, dass es bei der Bearbeitung von hochlegierten Stählen und stromleitenden Verbundmaterialien nur schwer möglich ist, den Prozess zu regeln, um dadurch eine bestimmte chemische Zusammensetzung der Oberflächenschicht zu schaffen oder die Anodenauflösungsgeschwindigkeiten der Komponenten des bearbeiteten Materials zur Gewährleistung einer minimalen Oberflächenrauheit einander anzugleichen. Hierbei werden die Impulspaketdauer, die Phase der Impulspaketgabe bezüglich des Moments maximaler Annäherung der Elektroden und die Vorschubgeschwindigkeit der Werkzeugelektrode geregelt und dabei ein Minimalwert des Elektrodenabstandes derart aufrechterhalten, dass die Anzahl der Spannungsimpulse im Paket mit abfallendem Charakter maximal wird.

Die aus dem Stand der Technik bekannten Verfahren zur elektrochemischen Bearbeitung von hochlegierten Stählen, Legierungen oder Verbundmaterialien können nicht gewährleisten, dass gleiche oder in einem gegebenen Verhältnis zueinander stehende Anodenauflösungsgeschwindigkeiten von bezüglich ihrer elektrochemischen Bearbeitbarkeit unterschiedlichen Klassen zuzuordnenden Komponenten eines Werkstückes erzielt werden. Dadurch ist es sehr schwierig, beim Einsatz dieser Verfahren eine wesentliche Verringerung der Oberflächenrauheit zu erzielen oder eine Oberflächenschicht mit einem bestimmten Mengenverhältnis der Komponenten des bearbeiteten Materials zu gestalten.

Weiterhin sind aus dem Stand der Technik Impulsstromquellen bekannt, bei denen zur Impulserzeugung ein mit parallel geschalteten Transistoren ausgeführter Schalter benutzt wird. Ein Nachteil dieser Schaltung besteht darin, dass eine Leistungssteigerung in solchen Stromquellen nur unter sorgfältiger Einhaltung identischer Stromflussbedingungen durch jeden Transistor möglich ist. Je größer die Leistung der Stromquelle ist, desto schwieriger wird die Einhaltung dieser Bedingungen. Ein zweiter Nachteil dieser Stromquelle besteht darin, dass die Impulsflanke vollständig durch die Induktivität der Last und der Anschlussleistungen bestimmt wird und es vielfach nicht möglich ist, Impulsflanken der gewünschten Steilheit zu erhalten, so dass keine Impulse erzeugt werden können, die hinreichend kurz sind, um die Bearbeitung von Werkstücken unter Bedingungen durchzuführen, bei denen das Ionisationspotential für eine Komponente einer Legierung erreicht und für die andere nicht erreicht wird.

Aus der Veröffentlichung UdSSR-Urheberschein Nr. 1156569 N 03 K5/01 ist eine Impulsstromquelle bekannt, die parallel verbundene Stromquellen enthält. Ein Nachteil dieser Stromquelle besteht darin, dass sie keine Impulse mit steilen Flanken kürzer als 200 $\mu$s erzeugen kann und folglich die minimale Impulsdauer nicht kürzer als 500 $\mu$s sein kann.

Aufgabe der vorliegenden Erfindung ist es, ein Verfahren anzugeben, bei dem die elektrochemische Bearbeitung insbesondere von hochlegierten Stählen, Legierungen und stromleitenden Verbundmaterialien mit Komponenten unterschiedlicher elektrochemischer Eigenschaften unter Erzielung einer optimierten Oberflächenrauheit oder einer spezifizierten chemischen Zusammensetzung der Oberflächenschicht möglich ist. Ebenfalls ist es die Aufgabe der Erfindung, ein Verfahren bereitzustellen, mit dem eine effektivere Materialbearbeitung möglich ist.

Erfindungsgemäß wird diese Aufgabe durch ein Verfahren mit den Merkmalen des Anspruchs 1 gelöst. Vorteilhafte Ausgestaltungen und Weiterbildungen der Erfindung sind in den Unteransprüchen aufgeführt.

Das erfindungsgemäße Verfahren sieht, ausgehend von einem gattungsgemäßen Verfahren vor, dass zwischen zwei Impulsgruppen ein Zwischenstromimpuls, bevorzugt längerer Dauer gegeben wird und die Dauer, Amplitude und Polarität des Zwischenstromimpulses so eingestellt werden, dass die physikalischen und chemischen Parameter des Elektrolyts, insbesondere der pH-Wert und die Temperatur, im Elektrodenzwischenraum ein Wert annimmt, der für die jeweils aufzulösende Komponente des Werkstückes optimal ist. Die Anodenstromimpulse in den Impulspaketen haben eine Dauer im Mikrosekundenbereich und wechseln sich mit zusätzlichen einzelnen Anoden- und/oder Kathodenstromimpulsen ab, die in den Pausen zwischen den Impulspaketen gegeben werden und eine Änderung des anfänglichen Säuregrades des Elektrolyten bewirken, wobei das Zusammenspiel der Polaritäten und Parameter der zusätzlichen Impulse, die sogenannten Zwischenimpulse, mit den Parametern der Anodenstromimpulse in den Impulsgruppen dergestalt eingerichtet wird, dass ein bestimmtes Verhältnis zwischen den mittleren Anodenauflösungsgeschwindigkeiten von bezüglich ihrer elektrochemischen Bearbeitbarkeit unterschiedlichen Klassen zuzuordnenden Komponenten des Werkstücks gewährleistet ist. Die Dauer und Amplitude der Anodenstromimpulse innerhalb einer Impulsgruppe werden aber so gewählt, dass für die ersten Impulse in der Gruppe die Anodenauflösung bei anfänglichen Werten des Säuregrads des Elektrolyten gewährleistet ist, die für eine der Komponenten des Werkstücks optimal sind und für die nachfolgenden Impulse in der Impulsgruppe der pH-Wert des Elektrolyts in einem Elektrodenzwischenraum auf Werte abgesenkt wird, die für eine andere Komponente des Werkstückes optimal sind.

Die Stromimpulse in den Impulsgruppen sind bevorzugt nicht länger als 100 $\mu$s, der Zwischenstromimpuls zwischen zwei Impulsgruppen ist dabei bevorzugt mindestens so lang wie ein Anodenstromimpuls. Die Impulsgruppen werden mit der oszillierenden Bewegung der Elektrode synchronisiert aufgebracht werden, um zum Zeitpunkt der maximalen Annäherung der Elektrode an das Werkstück die Stromimpulse als Arbeitsimpulse in Impulsgruppen geben zu können. Die Zwischenimpulse müssen nicht zum Zeitpunkt der maximalen Annäherung von Elektrode und Werkstück gegeben werden, bevorzugt ist vorgesehen, dass der Zwischenimpuls zwischen zwei aufeinander folgende Impulsgruppen gegeben wird, um bei jeder Bearbeitungsphase durch die Impulsgruppe ein optimal vorbereitetes Elektrolyt und eine optimal vorbereitete Elektrode und Werkstück vorzufinden, da der Zwischenimpuls neben der Einstellung der physikalischen und chemischen Eigenschaften auch die elektrischen Eigenschaften der Elektrode und des Werkstückes beeinflussen. Beispielsweise lagern sich Sauerstoffmoleküle bei der elektrochemischen Bearbeitung an der Oberfläche der Elektrode und des Werkstückes an, die mit dem Werkstück reagieren können, was zu Reaktionsprodukten und veränderten Eigenschaften des Werkstückes führt. Die Auswahl der Dauer, Amplitude und Polarität der Zwischenstromimpulse werden auch so gewählt, dass die elektrischen Eigenschaften der Elektroden- und Werkstückoberflächen so verändert werden, dass entweder eine maximale Abtragleistung erreicht wird oder bestimmte Legierungsbestandteile des Werkstückes schneller aufgelöst werden, um andere Legierungsbestandteile an der Werkstückoberfläche anzureichern.

Eine vorteilhafte Ausgestaltung der Erfindung sieht vor, dass die Anzahl der Zwischenstromimpulse auf der Grundlage der mittleren Anodenauflösungsgeschwindigkeit der jeweiligen Komponente und dem in dem Werkstück befindlichen Anteil der jeweiligen Komponente berechnet und aufgebracht wird.

Weiterhin ist vorgesehen, dass die Dauer und Amplitude des ersten Anodenstromimpulses in einer Impulsgruppe für die jeweils aufzulösenden Komponente in Abhängigkeit von dem in dem zum Zeitpunkt des Anodenstromimpulse vorliegenden pH-Wert des Elektrolyts eingestellt wird und dass die Dauer und Amplituden der nachfolgenden Anodenstromimpulse der Impulsgruppe an den sich durch den vorhergehenden Anodenstromimpuls verringernden pH-Wert des Elektrolyts in dem Elektrodenspalt angepasst werden. Da sich durch den Anodenstromimpuls der pH-Wert des Elektrolyts verändert, müssen die Dauer und Amplituden der Arbeitsimpulse in einer Gruppe dergestalt gewählt werden, dass für den ersten Impuls in der Gruppe die Anodenauflösung bei anfänglichen Werten des pH-Werts des Elektrolyts gewährleistet ist, die für eine erste Komponente des Werkstückes optimal sind, und für die nachfolgenden Anodenstromimpulse innerhalb der Impulsgruppe der pH-Wert geregelt auf Werte abgesenkt wird, die für eine andere Komponente des Werkstückes optimal sind. Um die Wirkung der Regelung der Auflösungsintensität der Komponenten des Werkstückmaterials zu verstärken, werden die Impulsdauern in einer Impulsgruppe dergestalt gewählt, dass für die ersten Impulse in der Gruppe das Erreichen eines Ionisationspotentials für eine erste Komponente und für die nachfolgenden Impulse das Erreichen des Ionisationspotentials einer weiteren Komponente gewährleistet ist. Dies wird mittels der zu unterschiedlichen Zeitpunkten hergestellten Elektrodenpotentiale der Komponenten in Elektrolyten mit unterschiedlichen Säuregradwerten erreicht. Durch die Anodenstromimpulse sinkt der pH-Wert des Elektrolyts in dem Elektrodenspalt, wobei die Anodenstromimpulse in der Impulsgruppe so gewählt werden, dass zumindest für zwei Komponenten das Ionisationspotential erreicht wird, oder aber eine Vorbereitung für die Bearbeitung mit einer nächsten Impulsgruppe stattfindet.

Dabei ist vorgesehen, dass der pH-Wert des Elektrolyts zu Beginn der Anodenstromimpulse zur Auflösung für eine Komponente eingestellt wird, so dass eine optimale Anodenauflösung erzielt wird.

Bei der elektrochemischen Bearbeitung von Werkstücken, die als Komponenten Wolfram und Kobalt enthalten, werden vor der Bearbeitung von Werkstücken Kathodenimpulse zur Schaffung eines hohen Anfangs-pH-Wertes des Elektrolyts eingesetzt, wobei die nachfolgenden ersten Anodenimpulse eine Impulsgruppe, Dauer und Amplitude so eingestellt werden, dass ein Ionisationspotential von Wolfram unter Passivierung von Kobalt erreicht wird und dass die Dauer und Amplitude der nachfolgenden Anodenstromimpulse so gewählt werden, dass eine Anodenauflösung von Kobalt in einem sauren Elektrolyt im Elektrodenspalt erfolgt. Die Kathodenstromimpulse sind dabei so gewählt, dass zu Beginn der Anodenstromimpulse das Ionisationspotential von Wolfram erreicht wird und eine Anodenauflösung in einem alkalischen Medium unter Passivierung des Kobalts gewährleistet ist. Die anschließende Anodenauflösung von Kobaltkomponenten erfolgt in einem sauren Medium unter gleichzeitiger Passivierung des Wolframs.

Bei der Bearbeitung von Werkstücken, die Komponenten aus den Titan-, Kobalt- und Wolframgruppen enthalten, wechseln sich die Polaritäten der zusätzlichen Impulse, also der Zwischenimpulse, dergestalt ab, dass ein zusätzlicher Anodenimpuls zur Schaffung eines Elektrolyten mit geringem pH-Wert eingesetzt wird, wobei die Parameter für die Anodenstromimpulse so ausgewählt werden, dass zunächst eine intensive Anodenauflösung der Titankomponente gewährleistet ist. In der nächsten Periode wird ein Zwischenimpuls umgekehrter Polarität gegeben, so dass anfänglich ein hoher pH-Wert in dem Elektrodenspalt erzeugt wird, wobei die Parameter und Anzahl der Anodenstromimpulse in der Impulsgruppe so gewählt werden, dass die elektrochemische Auflösung von Wolfram in einem alkalischen Medium gewährleistet ist. Das Verhältnis zwischen den Anodenauflösungsgeschwindigkeiten der Komponenten des zu bearbeitenden Werkstücks kann dabei so gewählt werden, dass auf der Oberfläche des Werkstücks eine Schicht mit vorgegebener chemischer Zusammensetzung geschaffen wird. Soll an der Oberfläche des Werkstücks ein erhöhter Titananteil vorhanden sein, werden die entsprechend anderen Komponenten elektrochemisch verstärkt aufgelöst, soll eher die Wolfram-Komponente überwiegen, wird kein alkalisches Medium gewährleistet, so dass Wolfram passiviert und nicht aufgelöst wird.

Um eine minimale Rauheit der zu bearbeitenden Flächen zu erzielen, wird das Verhältnis der Anodenauflösungsgeschwindigkeiten der jeweiligen Komponenten möglichst nah an eins gewählt.

Sofern Komponenten innerhalb des Werkstückes vorliegen, bei denen eine Anodenauflösung sowohl in einem sauren als auch in einem alkalischen Medium stattfinden, ist es vorgesehen, dass die Polaritäten der Zwischenimpulse alternierend eingestellt werden, so dass das Elektrolyt in dem Elektrodenzwischenraum zunächst alkalisch und dann sauer ausgebildet ist.

Zur Erzielung einer möglichst präzisen Bearbeitung ist es vorgesehen, dass die Vorder- und Rückflanken der Anodenstromimpulse innerhalb eines Impulspaketes kleiner oder gleich einer Mikrosekunde sind. Dadurch wird die Intensität von im Elektrodenzwischenraum und auf den Elektrodenoberflächen ablaufenden, unkontrollierten physikalisch-chemischen Prozessen während der Trennung oder des Anlegens von Strom verringert.

Zur Steigerung der Nachformgenauigkeit mittels Schaffung einer Potentialungleichheit an der zu bearbeitenden Oberfläche werden zwischen den Anodenstromimpulsen innerhalb eines Impulspaketes Kathodenstromimpulse angelegt, wobei deren Amplituden so gewählt werden, dass sie eine Entladung der Kapazitäten der elektrochemischen Doppelschichten bewirken.

Zur Regelung des Verfahrens ist es vorgesehen, dass für jeden Stromimpuls der Spannungsabfall über dem Elektrodenzwischenraum gemessen wird. Dabei wird der elektrische Widerstand des Elektrodenzwischenraums berechnet und für aufeinanderfolgende Stromimpulse gleicher Polarität die Varianz des Widerstandes berechnet und mit einem Sollwert verglichen. Bei Überschreitung des Sollwertes wird die Vorschubgeschwindigkeit der Werkzeugelektrode verringert, bei Unterschreitung erhöht, wobei die Varianz des Widerstandes konstant gehalten wird. Die Berechnung des Spannungsabfalls kann dabei in einer oder mehren charakteristischen Impulsphasen gemessen werden. Die Varianz der aufeinanderfolgenden Stromimpulse wird für gleichnamige, charakteristische Punkte bestimmt.

Eine besonders einfache Führung des Verfahrens wird ermöglicht, wenn als Elektrolyt ein Einkomponenten-Elektrolyt eingesetzt wird, beispielsweise mit $NaNO_3$ als Salz in Wasser. Dadurch ist es im industriellen Einsatz möglich, durch einfache Messung des Salzgehaltes festzustellen, ob die elektrochemischen Eigenschaften des Elektrolyts den berechneten Anforderungen entsprechen oder ob Wasser oder Salz ergänzt werden muss. Da nur an einem Parameter eine Veränderung vorgenommen werden kann, entfällt eine aufwendige Analyse eine Mehrkomponenten-Elektrolytes und die Berücksichtigung der Wechselwirkungen der jeweiligen Komponenten miteinander in dem Elektrolyt.

Die Schaltungsanordnung für eine Stromquelle zur Durchführung des Verfahrens sieht vor, dass jeder Generator mit der Last über einen Umschalter verbunden ist, der den Stromgenerator von der Last trennt, solange der Generatorstrom noch nicht das Sollniveau erreicht hat oder um die Stromimpulse zu beenden, beispielsweise wenn das Einlegen einer Pause zwischen den Stromimpulsen erforderlich ist. Der Umschalter schaltet den Strom auf Last um, um auf der Last einen Impuls von spezifizierter Dauer zu erzeugen, wobei der Schaltkontakt des Umschalters so mit dem Ausgang des Stromgenerators verbunden ist, dass der Ruhekontakt mit dem gemeinsamen Anschlusspunkt und der Arbeitskontakt mit der Last verbunden ist.

Um möglichst steile Impulsflanken erzeugen zu können, ist vorgesehen, dass die gesamte innere Induktivität der Stromquelle und der Leitungen, die die Stromquelle mit dem Umschalter verbinden, größer als die gesamte Induktivität der Last und der Leitungen ist, die den Umschalter mit der Last verbinden.

Die Erfindung wird nachfolgend anhand der beigefügten Zeichnungen näher erläutert. Es zeigen:

Figuren 1 - 3 - Diagramme von Impulsgruppen und Zwischenimpulsen und Auswirkungen auf den pH-Wert des Elektrolyts;

Figur 4 - ein Diagramm, das schematisch die Ermittlung der Parameter der Anodenstromimpulse zeigt;

Figur 5 - den Verlauf eines Zwischenstrom- und Spannungsimpulses am Elektrodenzwischenraum im Millisekundenbereich;

Figur 6 - schematisch den Anodenstrom und Spannungsimpuls am Elektrodenzwischenraum für Impulsgruppen;

Figur 7 - schematisch die Zeitentwicklung der maximalen Varianz beim Bearbeitungsprozess mit einer konstanten Vorschubgeschwindigkeit, die die Auflösungsgeschwindigkeit deutlich übersteigt;

Figur 8 - I-t-Diagramme, die die Funktion der Stromquelle darstellen; sowie

Figur 9 - ein Schaltbild eines Umschalters zur Erzeugung von Stromimpulsen.

Aufgrund der Nichtstationarität der Elektrodenpotentiale kann für jeden Anodenstromimpuls aus einer Impulsgruppe unter geregeltem und monotonem Absenken des pH-Wertes des Elektrolyts von Anodenstromimpuls zu Anodenstromimpuls durch die Wahl der Impulsdauern eine für die eine oder die andere Komponente des zu bearbeitenden Werkstückes, beispielsweise ein Verbundmaterial oder eine Legierung, eine optimale Entwicklungsphase der Elektrodenprozesse erzeugt werden.

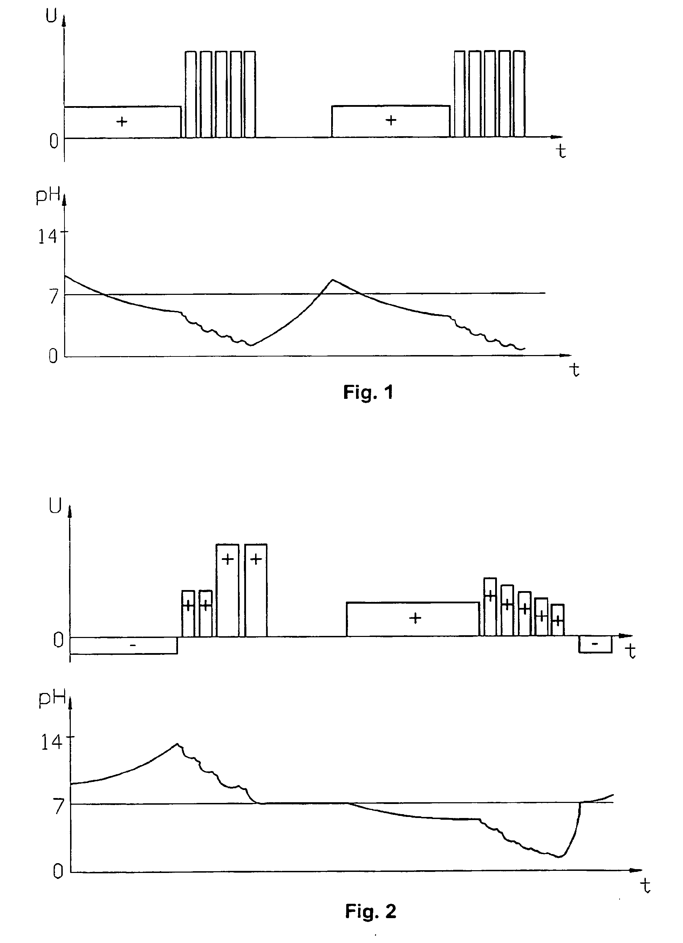

Diesen Elektrodenprozessen kommt bei der Gewährleistung der notwendigen Anodenauflösungsintensität der jeweiligen Materialkomponenten sowie bei der Gestaltung der Oberflächenqualität des zu bearbeitenden Werkstückes eine entscheidende Rolle zu. Es ist somit möglich, bei der elektrochemischen Bearbeitung die Intensität der selektiven Auflösung der jeweils aufzulösenden Komponenten zu regeln. Hierfür werden an den Elektrodenzwischenraum periodisch kurze Anodenstromimpulse mit Impulsdauern im Mikrosekundenbereich angelegt, die sich mit wesentlich längeren Zwischenstromimpulsen, mit Impulsdauern im Millisekundenbereich, mit normaler oder umgekehrter Polarität abwechseln. Die baldigen Abfolgen und Auswirkungen der Impulsgruppen und Zwischenimpulse sind in den Figuren 1 - 3 dargestellt.

In der Figur 1 ist ein Anfangsimpuls als Arbeitsimpulse mit der gleichen Polarität der nachfolgenden Anodenstromimpulse einer Impulsgruppe gezeigt. Dies hat zur Folge, dass der pH-Wert abgesenkt wird und einen Elektrolyt im Elektrodenzwischenraum mit einem stark sauren Medium erzeugt wird. Nach Erreichen eines für die Auflösung zumindest einer Komponente optimalen pH-Wertes, werden Anodenstromimpulse im Mikrosekundenbereich zur Auflösung der jeweiligen Komponente angelegt. Durch die Anodenstromimpulse wird der pH-Wert des Elektrolyts im Elektrodenzwischenraum weiter verringert. Nach Beendigung der Anodenstromimpulse steigt der pH-Wert wieder an, bis er über den neutralen Wert hinaus einen alkalischen Wert annimmt. Zur Absenkung de pH-Wertes wird erneut ein Zwischenstromimpuls, der kein Arbeitsimpuls ist, normaler Polarität angelegt und eine erneute Impulsgruppe von Anodenstromimpulsen aufgebracht, um die entsprechende Materialkomponente aufzulösen.

In der Figur 2 ist gezeigt, wie ausgehend von einem alkalischen Startwert für das Elektrolyt ein Anfangsimpuls umgekehrter Polarität aufgebracht wird, um den Elektrolyt stark alkalisch zu machen. Anschließend werden die Anodenstromimpulse aufgebracht, um die entsprechende Komponente aufzulösen. Durch die Anodenstromimpulse wird der pH-Wert abgesenkt. Der Figur 2 ist zu entnehmen, dass die Amplitude und die Dauer der Anodenstromimpulse verschieden wählbar ist, wodurch einerseits eine gesteuerte Verringerung des pH-Wertes des Elektrolyts und andererseits eine kontrollierte Auflösung der jeweils aufzulösenden Komponente erfolgt. Nach Ende der ersten Anodenstromimpulsgruppe ist ein neutraler pH-Wert erreicht, dieser wird durch den nachfolgenden Zwischenimpuls normaler Polarität abgesenkt. Durch die nachfolgenden Anodenstromimpulse mit abnehmender Amplitude wird die entsprechend aufzulösende Komponente des Werkstückes aufgelöst und der pH-Wert weiter verringert. Die Darstellung gemäß der Figur 2 kann für eine Wolfram-Carbit-Kobaltlegierung geeignet sein, bei der zunächst ein alkalisches Medium erzeugt wird und die Amplitude und Dauer der ersten Anodenstromimpulse so gewählt werden, dass zunächst die Phase der aktiven Auflösung der Wolfram-Komponente überwiegt. Die nachfolgenden Impulse, also der Zwischenimpuls und die Anodenstromimpulse dienen dann zur Auflösung des Kobalts im sauren Medium, wobei jeweils die andere Komponente passiviert wird.

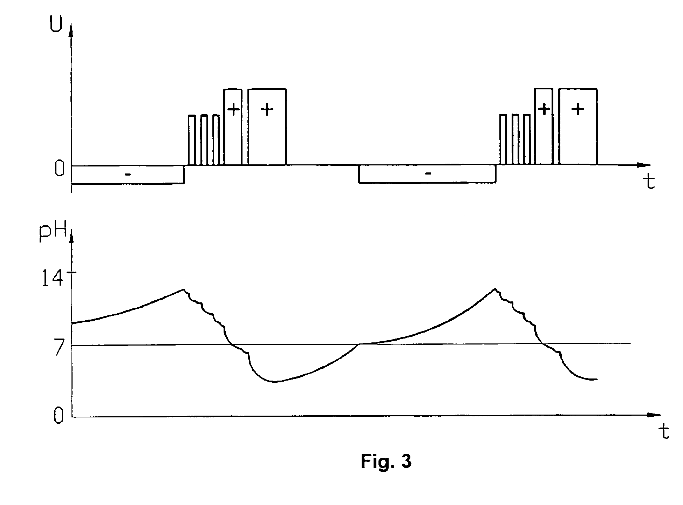

Die Figur 3 zeigt ebenfalls einen Zusammenhang zwischen den Stromimpulsen, der Polarität, der Amplitude sowie der Dauer. Durch die Anlegung eines Zwischenimpulses umgekehrter Polarität wird ein stark alkalisches Elektrolyt erzeugt. Anodenstromimpulse geringer Amplitude und geringer Dauer bewirken ein geringes Absinken des pH-Wertes, die Gabe von Anodenstromimpulsen größerer Amplitude und längerer Dauer verringert den pH-Wert innerhalb des Elektrodenzwischenraumes entsprechend.

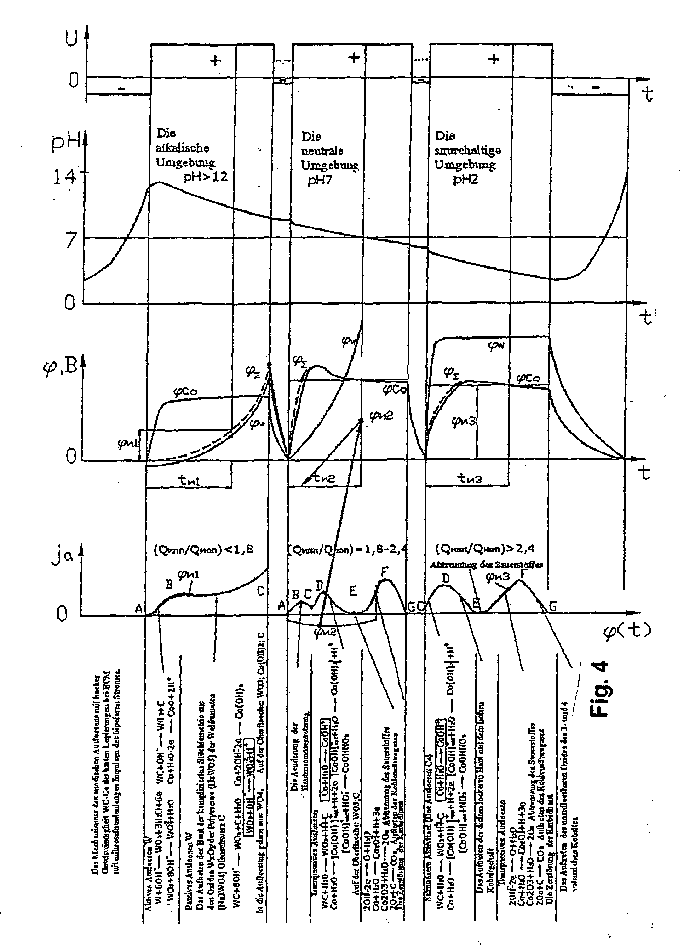

Der Zweck der Zwischenstromimpulse umgekehrter Polarität besteht zudem darin, die Oberfläche des Werkstückes mit Wasserstoffbläschen von Filmen und Ablagerungen zu säubern und zudem vor der Impulsgruppe aus kurzen Anodenstromimpulsen im Elektrodenzwischenraum ein stark alkalisches Medium mit hohem pH-Wert zu schaffen. Die Zwischenstromimpulse normaler Polarität schaffen ein entsprechend stark saures Medium mit einem niedrigen pH-Wert. Somit beginnen die ersten Anodenstromimpulse einer jeden Impulsgruppe je nach chemischer Zusammensetzung entweder in saurem order in stark alkalischem Medium zu wirken. Zum Beispiel wird im Falle einer WC-Co-Legierung ein zusätzlicher Impuls umgekehrter Polarität gegeben, der ein alkalisches Medium schafft. Die Amplitude und die Dauer der ersten Mikrosekundenimpulse werden so gewählt, dass die Phase der aktiven Auflösung des Wolframs überwiegt. Die nachfolgenden Impulse innerhalb einer Impulsgruppe realisieren die Anodenauflösung in einem Medium mit entsprechend abgesenktem pH-Wert, beispielsweise startend aus einem alkalischen Medium werden die nachfolgenden Impulse in einem neutralen oder sauren Medium arbeiten. Die Dauer und die Amplitude dieser Impulse werden so gewählt, dass die vorrangige elektrochemische Auflösung der jeweils gewünschten Komponente, hier der Co-Komponente der Legierung unter Transpassivitätsbedingungen gewährleistet ist. Dies ist in der Figur 4 dargestellt.

Auf diese Weise können durch eine zweckmäßige Wahl der Impulsdauer- und Zahlen der Anodenstromimpulse innerhalb einer Impulsgruppe für einen gegebenen Zwischenimpuls die Auflösungsgeschwindigkeiten der jeweiligen Komponenten, beispielsweise Legierungskomponenten, aneinander angeglichen und eine minimale Oberflächenrauheit gewährleistet werden, wenn diese gewünscht wird. Ebenfalls können bestimmte Komponenten stärker oder schwächer aufgelöst werden, so dass es zu einer Anreicherung oder Abreicherung der jeweiligen Komponente an der Oberfläche kommt.

Grundsätzlich ist auch möglich, innerhalb einer Impulsgruppe Stromimpulse umgekehrter Polarität aufzubringen, um die Kapazitäten der elektrischen Doppelschichten zwangszuentladen. Die Zwangsentladung der elektrochemischen Doppelschichten wird auch durch die Zwischenimpulse umgekehrter Polarität bewirkt, so dass die Wirkung der Potentialungleichheit an der Oberfläche verstärkt wird und dementsprechend die Nachformgenauigkeit erhöht wird.

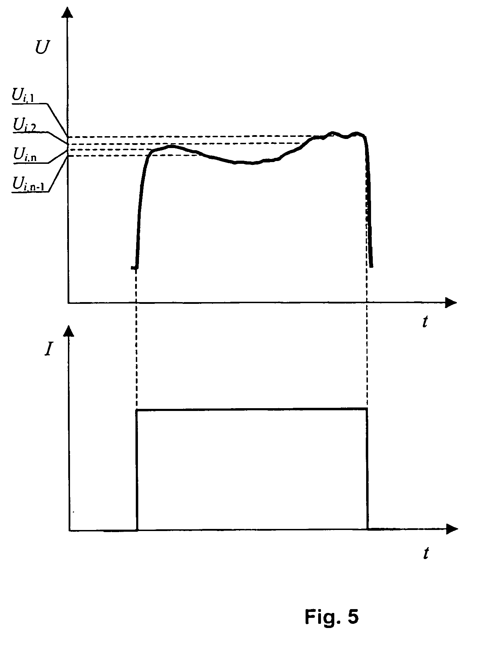

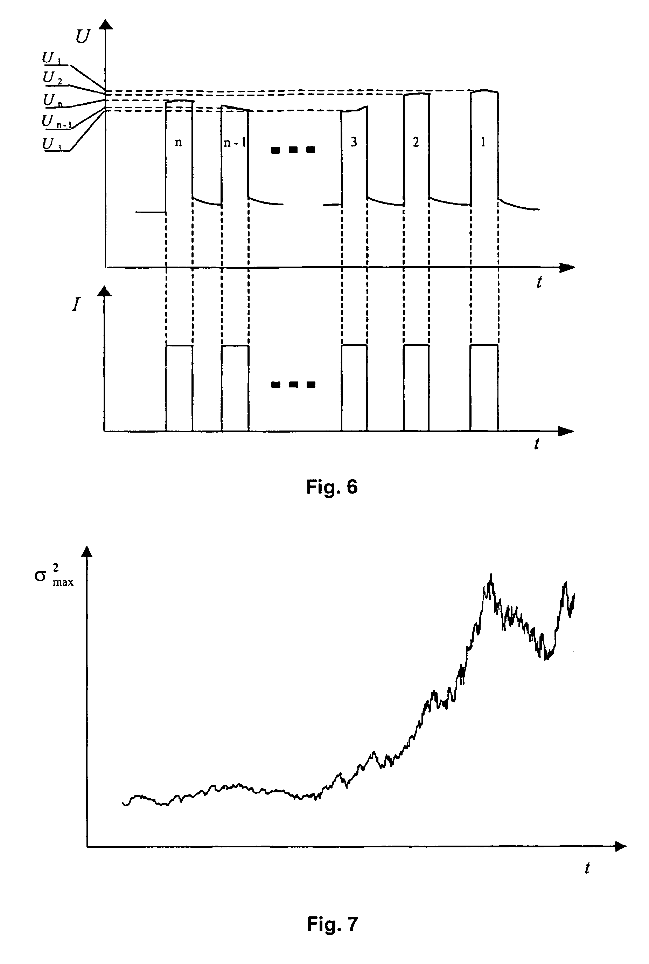

Um die Bearbeitung der Werkstücke mit dem Verfahren bei kleinstmöglichen Elektrodenabständen durchführen zu können, wird in mehreren charakteristischen Phasen im Moment der Gabe eines Zwischenstromimpulses, wie in der Figur 5 dargestellt ist, oder einer Anodenstromimpulsgruppe, wie in der Figur 6 dargestellt ist, der Spannungsabfall über dem Elektrodenzwischenraum gemessen und dessen elektrischer Widerstand mit folgender Formel berechnet:

$$R_{i,j} = \frac{U_{i,j}}{I}, i = 1..k, j = 1..n,$$

wobei

I - Impulsstrom;
U- Spannung über dem Elektrodenzwischenraum in charakteristischen Phasen im Moment der Gabe des Stromimpulses;
K - Anzahl der analysierten Stromimpulse;
n - Anzahl de analysierten Spannungswerte in einem Impuls.

Sodann wird an gleichnamigen, charakteristischen Punkten die Varianz des Widerstandswertes für k aufeinanderfolgende Zwischenstromimpulse oder Impulsgruppen berechnet, von denen zum gegebenen Zeitpunkt k-1 dem letzten Impuls bzw. der letzten Impulsgruppe vorausgingen:

$$\sigma_j^2 = \frac{1}{k}\sum_{i=1}^{k} R_{i,j}^2 - \left(\frac{1}{k}\sum_{i=1}^{k} R_{i,j}\right)^2.$$

Aus den berechneten Varianzwerten $\sigma_j^2$ (j=1..k) wird der Maximalwert ausgewählt:

$$\sigma_{max}^2 = \max\left(\sigma_1^2, \sigma_2^2, \sigma_3^2, ..., \sigma_{n-1}^2, \sigma_n^2\right).$$

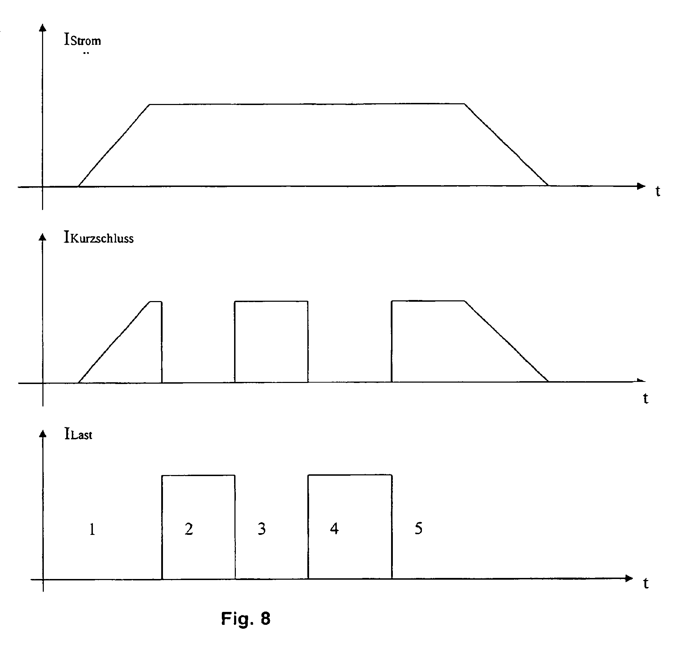

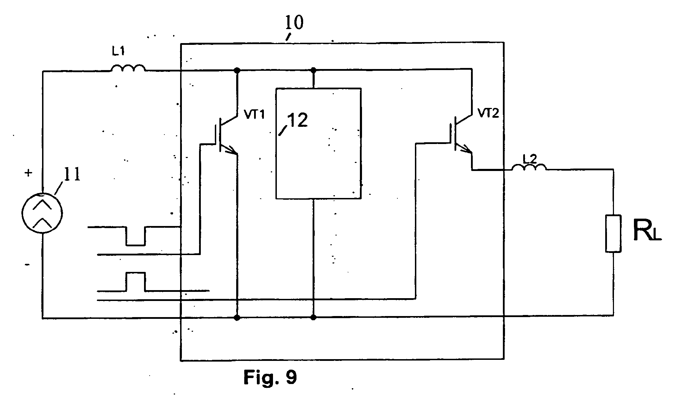

Der Maximalwert der Varianz wird mit einem Sollwert verglichen und im Falle einer Überschreitung wird die Vorschubgeschwindigkeit der Werkzeugelektrode verringert. Im Falle einer Unterschreitung des Sollwertes wird die Vorschubgeschwindigkeit erhöht und der Prozess wird bei konstant gehaltener maximaler Varianz durchgeführt.
In der Figur 7 ist ein Beispiel für die Zeitentwicklung der maximalen Varianz bei der Bearbeitung gemäß dem vorliegenden Verfahren mit einer konstanten Vorschubgeschwindigkeit gezeigt, bei der die Auflösungsgeschwindigkeit deutlich überschritten wird. Dies zeigt sich durch die Erhöhung der maximalen Varianz.
Zur Umsetzung des Verfahrens ist eine Schaltungsanordnung vorgesehen, die dazu in der Lage ist, Impulse mit Impulsdauern sowohl im Mikrosekundenbereich als auch im Millisekundenbereich zu erzeugen, wobei die Parameter der Impulsflanken im Wesentlichen nicht von der Induktivität der Anschlussleitungen und der Last abhängen und deren Leistung durch einfaches Parallelschalten der notwendigen Anzahl von einzelnen Stromquellen gesteuert werden kann. Zu diesem Zweck sind die einzelnen Stormquellen 11, wie in der Figur 9 gezeigt, über einen Umschalter 10 mit der Last $R_L$ verbunden, wobei der Schaltkontakt mit dem Ausgang des Stromgenerators 11, dessen Ruhekontakt mit dem gemeinsamen Anschlusspunkt und dessen Arbeitskontakt mit der Last $R_L$ verbunden ist. Für die maximale Wirkung ist es vorgesehen, dass die gesamte innere Induktivität L1 der Stromquelle 11 und der Leitung, die die Stromquelle 11 mit dem Schalter 10 verbindet, wesentlich höher als die gesamte Induktivität L2 der Last $R_L$ und der Leitung ist, die den Schalter 10 mit der Last $R_L$ verbindet. Alternativ müsste die Stromquelle eine Spannungsreserve aufweisen, die die Lastspannung einfach übersteigt.
Die Funktionsweise ist anhand der Zeitdiagramme aus der Figur 8 zu sehen, wobei der Schalter 11 in Form von zwei Transistoren VT1, VT2 ausgeführt ist. Der erste Transistor VT1 ist normal leitend, der zweite Transistor VT2 ist normal gesperrt.
In der Figur 8 sind drei Stromverläufe über der Zeit aufgetragen, im oberen Diagramm der gesamte Stromverlauf, im mittleren Diagramm der kurze Stromverlauf und im unteren Diagramm der Laststromverlauf. Im Zeitpunkt 1 wird die Stromquelle 11 eingeschaltet und der Strom fließt vom Flusspol der Stromquelle 11 durch den leitenden Transistor VT1 zum Minuspol der Stromquelle 11. Im Allgemeinen kann die Stromquelle 11 auch ununterbrochen eingeschaltet sein. Im Zeitabschnitt 2 wird der Transistor VT1 gesperrt und der Transistor VT2 wird durchgeschaltet. Da im Lastkreis unabweichlich eine Induktivität L2 vorhanden ist, kann der Strom im Lastkreis nicht verzögerungsfrei, nämlich mit der Einschaltgeschwindigkeit des Transistors VT2 eingeschaltet werden. Gleichzeitig kann wegen der Induktivität L1 der Strom im Quellkreis nicht verzögerungsfrei, also mit der Ausschaltgeschwindigkeit des Transistors VT1 zurückgehen. An den Induktivitäten L1 und L2 entstehen einander entgegengerichtete Selbstinduktionsspannungen. Der Betrag dieser Spannung wird durch einen Spannungsbegrenzer 12 auf einen für die Transistoren VT1, VT2 ungefährlichen Pegel begrenzt und kann, verglichen mit den Arbeitslastspannungen, sehr groß sein. Bei einer Lastspannung von 12 V kann die Spannung z. B. 500 V betragen. Unter der Einwirkung einer solch hohen Spannung wächst der Lastraum sehr schnell, wie die Begrenzungsspannung die Arbeitsspannung übersteigt. Damit der Strom der Stromquelle 11 bei einem Polaritätswechsel nicht abfällt, wird die Induktivität L1 wesentlich größer als L2 gewählt. Als Induktivität L1 können hierbei die innere Induktivität der Schaltstromquelle 11 und die Induktivitäten der Leitungen dienen. Die Induktivität L2 wird durch ein maximales Annähern des Schalters 10 an die Last $R_L$ minimiert. Eine hohe Überspannung lässt sich auch bei einer kleinen Induktivität L1 erzielen, falls die Stromquelle 11 eine hohe Leerlaufspannung aufweist.

Zum Zeitpunkt 3 wird der Transistor VT1 geöffnet und der Transistor VT2 gesperrt. An der Induktivität L2 entsteht eine Selbstinduktionsspannung in Richtung des Stromes. Diese Spannung wird an den Transistor VT2 angelegt und durch den Spannungsbegrenzer 12 begrenzt. Da die Begrenzungsspannung hinreichend hoch und die Induktivität L2 minimal ist, fällt der Strom im Lastkreis sehr schnell ab bzw. wird auf den Transistor VT1 umgeschaltet.

Zu den Zeitpunkten 4 und 5 wiederholt sich der Zyklus; zur Erlangung der benötigten Impulsanzahl kann der Zyklus entsprechend oft wiederholt werden. Nach Erhalt der benötigten Impulsanzahl kann die Stromquelle 11 ausgeschaltet werden. Auf diese Weise bildet die erfindungsgemäße Stromquelle an ihrem Ausgang Impulse mit positiver Überspannung beim Einschalten und mit negativer Überspannung beim Ausschalten des jeweiligen Impulses. Hierbei kann der Überspannungswert die Arbeitsspannung um das Zehnfache übersteigen. Die Überspannung wird an die Leitungsinduktivität und nicht an die Last $R_L$ selbst angelegt, so dass sich an Anlagen zur elektrochemischen Materialbearbeitung Stromimpulse mit Flanken von weniger als 1 μs erhalten lassen.

**Patentansprüche**

1. Verfahren zur elektrochemischen Bearbeitung elektrisch leitender Werkstücke aus einer Legierung, Stoffgemisch oder Verbundmaterial aus Komponenten mit unterschiedlichen elektrochemischen Eigenschaften in einem anfänglich neutralen Elektrolyt mit einer Werkzeugelektrode, bei dem hochfrequente Anodenstromimpulse geringer Dauer an einen Elektrodenzwischenraum zwischen dem Werkzeug und dem Werkstück angelegt werden und das Werkzeug eine oszillierende Bewegung auf das Werkstück zu und von dem Werkstück weg ausführt und die Anodenstromimpulse als Impulsgruppe im Zeitpunkt maximaler Annäherung zwischen dem Werkstück und dem Werkzeug aufgebracht werden, **dadurch gekennzeichnet, dass** zwischen zwei Impulsgruppen ein Zwischenstromimpuls gegeben wird und die Dauer, Amplitude und Polarität des Zwischenstromimpulses so eingestellt werden, dass der ph-Wert und/oder die Temperatur des Elektrolyts einen Wert annimmt, dass ein bestimmtes Verhältnis zwischen den mittleren Anodenauflösungsgeschwindigkeiten von bezüglich ihrer elektrochemischen Bearbeitbarkeit unterschiedlichen Klassen zuzuordnenden Komponenten des Werkstücks eingestellt wird.

2. Verfahren nach Anspruch 1, **dadurch gekennzeichnet, dass** der Zwischenimpuls mindestens so lang wie ein Anodenstromimpuls ist.

3. Verfahren nach einem der Ansprüche 1 oder 2, **dadurch gekennzeichnet, dass** die Stromimpulse in den Impulsgruppen nicht länger als 100 μs sind und der Zwischenstromimpuls mindestens doppelt so lang wie ein Anodenstromimpuls ist.

4. Verfahren nach einem der voranstehenden Ansprüche, **dadurch gekennzeichnet, dass** die Impulsgruppen mit der oszillierenden Bewegung der Elektrode synchronisiert aufgebracht werden.

5. Verfahren nach einem der voranstehenden Ansprüche, **dadurch gekennzeichnet, dass** der Zwischenimpuls zwischen zwei aufeinander folgende Impulsgruppen gegeben wird.

6. Verfahren nach einem der voranstehenden Ansprüche, **dadurch gekennzeichnet, dass** die Anzahl der Zwischenstromimpulse auf der Grundlage der mittleren Anodenauflösungsgeschwindigkeit der jeweiligen Komponente und dem in dem Werkstück befindlichen Anteil der jeweiligen Komponente berechnet und aufgebracht wird.

7. Verfahren nach einem der voranstehenden Ansprüche, **dadurch gekennzeichnet, dass** die Dauer und Amplitude des ersten Anodenstromimpulses in einer Impulsgruppe für die aufzulösende Komponente in Abhängigkeit von dem in dem zum Zeitpunkt des Anodenstromimpulses vorliegenden pH-Wert des Elektrolyts eingestellt wird und dass die Dauer und Amplituden der nachfolgenden Anodenstromimpulse der Impulsgruppe an den sich durch den vorhergehenden Anodenstromimpulse verringernden pH-Wert Elektrolyts in dem Elektrodenspalt angepasst werden.

8. Verfahren nach einem der voranstehenden Ansprüche, **dadurch gekennzeichnet, dass** die Dauer der Anodenstromimpulse innerhalb der Impulsgruppe dergestalt gewählt werden, dass die Absenkung des pH-Wertes des Elektrolyts in dem Elektrodenspalt durch die Anodenstromimpulse bis auf einen Wert erfolgt, der für eine aufzulösende Komponente des Werkstückes optimal ist.

9. Verfahren nach Anspruch 8, **dadurch gekennzeichnet, dass** der pH-Wert bei Beginn der Anodenstromimpulse zur Auflösung für eine Komponente eingestellt wird.

10. Verfahren nach einem der voranstehenden Ansprüche, **dadurch gekennzeichnet, dass** die Polaritäten der Zwischenimpulse alternierend eingestellt werden.

11. Verfahren nach einem der voranstehenden Ansprüche, **dadurch gekennzeichnet, dass** die Anzahl, Dauer und Amplitude der Impulspakete so eingestellt wird, dass das Verhältnis der aufgelösten Komponenten zueinander nahe oder gleich eins ist.

12. Verfahren nach einem der voranstehenden Ansprüche, **dadurch gekennzeichnet, dass** die Vorder- und Rückflanken der Anodenstromimpulse kleiner oder gleich 1 $\mu$s ist.

13. Verfahren nach einem der voranstehenden Ansprüche, **dadurch gekennzeichnet, dass** innerhalb der Impulsgruppe Kathodenstromimpulse angelegt werden.

14. Verfahren nach Anspruch 13, **dadurch gekennzeichnet, dass** die Dauer und Amplitude der Kathodenstromimpulse so gewählt wird, dass eine Entladung der Kapazitäten der elektrochemischen Doppelschichten auftritt.

15. Verfahren nach einem der voranstehenden Ansprüche, **dadurch gekennzeichnet, dass** für jeden Stromimpuls der Spannungsabfall über dem Elektrodenzwischenraum gemessen wird, dass der elektrische Widerstand des Elektrodenzwischenraumes berechnet und für aufeinander folgende, gleichgerichtete Stromimpulse gleicher Polarität die Varianz des Widerstandes berechnet und mit einem Sollwert verglichen wird und bei Überschreitung des Sollwertes die Vorschubgeschwindigkeit der Werkzeugelektrode verringert und bei Unterschreitung erhöht wird, wobei die Varianz konstant gehalten wird.

16. Verfahren nach einem der voranstehenden Ansprüche, **dadurch gekennzeichnet, dass** als Elektrolyt ein Einkomponenten-Elektrolyt eingesetzt wird.

**Claims**

1. Method for electrochemical machining of electrically conducting workpieces made from an alloy, substance mixture or composite material comprising components with different electrochemical properties in an initially neutral electrolyte with the aid of a tool electrode, in the case of which high frequency anode current pulses of short duration are applied to an electrode interspace between the tool and the workpiece and the tool executes an oscillating movement towards the workpiece and away from the workpiece, and the anode current pulses are applied as a pulse group at the instant of maximum approach between the workpiece and the tool, **characterized in that** an intermediate current pulse is provided between two pulse groups, and the duration, amplitude and polarity of the intermediate current pulse are set such that the pH value and/or the temperature of the electrolyte assume(s) a value such that a specific ratio is set between the mean anode dissolution rates of components of the workpiece which are to be assigned to different classes with reference to their electrochemical machineability.

2. Method according to Claim 1, **characterized in that** the intermediate pulse is at least as long as an anode current pulse.

3. Method according to one of Claims 1 or 2, **characterized in that** the current pulses in the pulse groups are not longer than 100 $\mu$s, and the intermediate current pulse is at least twice as long as an anode current pulse.

4. Method according to one of the preceding claims, **characterized in that** the pulse groups are applied synchronously with the oscillating movement of the electrode.

5. Method according to one of the preceding claims, **characterized in that** the intermediate pulse is provided between two consecutive pulse groups.

6. Method according to one of the preceding claims, **characterized in that** the number of the intermediate current pulses is calculated and applied on the basis of the mean anode dissolution rate of the respective component, and on the basis of the fraction, present in the workpiece, of the respective component.

7. Method according to one of the preceding claims, **characterized in that** the duration and the amplitude of the first anode current pulse in a pulse group is set for the component to be dissolved as a function of the pH value of the electrolyte which is present at the instant of the anode current pulse, and **in that** the duration and the amplitudes of the subsequent anode current pulses of the pulse group are adapted to the pH value of the electrolyte in the electrode gap, which value is decreasing owing to the preceding anode current pulses.

8. Method according to one of the preceding claims, **characterized in that** the duration of the anode current pulses within the pulse group is selected in such a way that the lowering of the pH value of the electrolyte in the electrode gap through the anode current pulses is effected down to a value which is optimal for a component of the workpiece which is to be dissolved.

9. Method according to Claim 8, **characterized in that** the pH value is set for a component at the start of the anode current pulses for dissolution.

10. Method according to one of the preceding claims, **characterized in that** the polarities of the intermediate pulses are set in an alternating fashion.

11. Method according to one of the preceding claims, **characterized in that** the number, duration and amplitude of the pulse packets are set such that the ratio of the dissolved components to one another is close or equal to one.

12. Method according to one of the preceding claims, **characterized in that** the leading and trailing edges of the anode current pulses are smaller than or equal to 1 $\mu$s.

13. Method according to one of the preceding claims, **characterized in that** cathode current pulses are applied within the pulse group.

14. Method according to Claim 13, **characterized in that** the duration and amplitude of the cathode current pulses are selected such that discharging of the capacitances of the electrochemical double layers occurs.

15. Method according to one of the preceding claims, **characterized in that** for each current pulse the voltage drop across the electrode interspace is measured, and **in that** the electrical resistance of the electrode interspace is calculated, and for consecutive, rectified current pulses of the same polarity the variance of the resistance is calculated and compared with a desired value, and the rate of advance of the tool electrode is reduced upon overshooting of the desired value, and raised upon undershooting, the variance being held constant.

16. Method according to one of the preceding claims, **characterized in that** a single-component electrolyte is used as electrolyte.


**Revendications**

1. Procédé pour usiner électrochimiquement une pièce à usiner électriquement conductrice en un alliage, un mélange de produits ou un matériau composite à partir de composants ayant différentes caractéristiques électrochimiques dans un électrolyte initial neutre au moyen d'une électrode d'outil, dans lequel des impulsions de courant anodique de faible durée sont appliquées entre l'outil et la pièce à usiner et un mouvement oscillant vers, la pièce à usiner et à partir de la pièce à usiner est imparti à l'outil et les impulsions de courant anodique sont générées en tant que groupes d'impulsions à l'instant où la pièce à usiner et l'outil sont rapprochées au maximum l'un de l'autre, **caractérisé en ce qu'**entre deux groupes d'impulsions, une impulsion intermédiaire de courant est générée et la durée, l'amplitude et la polarité de l'impulsion intermédiaire de courant sont réglées de telle sorte que la valeur du pH et/ou la température de l'électrolyte prenne une valeur telle qu'un rapport défini est établi entre les vitesses moyennes de décomposition des anodes compte tenu de leur usinabilité électrochimique liée aux classes des composants de la pièce à usiner.

**2.** Procédé selon la revendication 1, **caractérisé en ce que** l'impulsion intermédiaire est au moins aussi longue qu'une impulsion de courant anodique.

**3.** Procédé selon l'une des revendications 1 ou 2, **caractérisé en ce que** les impulsions de courant dans les groupes d'impulsions n'ont pas une durée supérieure à 100 µs et la durée de l'impulsion intermédiaire est au moins égale au double de celle d'une impulsion anodique.

**4.** Procédé selon l'une des revendications précédentes, **caractérisé en ce que** les groupes d'impulsions sont générés en synchronisme avec le mouvement oscillant de l'électrode.

**5.** Procédé selon l'une des revendications précédentes, **caractérisé en ce que** l'impulsion intermédiaire est générée entre deux groupes d'impulsions successives.

**6.** Procédé selon l'une des revendications précédentes, **caractérisé en ce que** le nombre des impulsions intermédiaires de courant est calculé et appliqué sur la base de la vitesse moyenne de décomposition de l'anode de chacun des composants et de la teneur de chacun des composants de la pièce à usiner.

**7.** Procédé selon l'une des revendications précédentes, **caractérisé en ce que** la durée et l'amplitude de la première impulsion de courant anodique dans un groupe d'impulsions sont réglées pour les composants à décomposer en fonction de la valeur de pH de l'électrolyte existant à l'instant de l'impulsion anodique et **en ce que** la durée et les amplitudes des impulsions de courant anodique suivantes du groupe d'impulsions sont adaptées à la valeur du pH de l'électrolyte dans l'espace interélectrode qui a chuté du fait des impulsions de courant anodique précédentes.

**8.** Procédé selon l'une des revendications précédentes, **caractérisé en ce que** les durées des impulsions de courant anodique entre le groupe d'impulsions sont choisies de telle sorte que la chute de la valeur de pH de l'électrolyte dans l'espace interélectrodes du fait des impulsions de courant anodique a lieu jusqu'à une valeur qui est optimale pour un composant décomposable de l'outil.

**9.** Procédé selon la revendication 8, **caractérisé en ce que** la valeur du pH est réglée au commencement des impulsions de courant anodique pour la décomposition d'un composant.

**10.** Procédé selon l'une des revendications précédentes, **caractérisé en ce que** les polarités des impulsions intermédiaires sont réglées de façon alternée.

**11.** Procédé selon l'une des revendications précédentes, **caractérisé en ce que** le nombre, la durée et l'amplitude des paquets d'impulsions sont réglées de telle sorte que le rapport des composés décomposés les uns par rapport aux autres est égal ou sensiblement égal à 1.

**12.** Procédé selon l'une des revendications précédentes, **caractérisé en ce que** les flancs avant et arrière des impulsions de courant anodique sont inférieurs ou égaux à 1 µs.

**13.** Procédé selon l'une des revendications précédentes, **caractérisé en ce qu'**entre les groupes d'impulsions sont engendrées des impulsions de courant cathodique.

**14.** Procédé selon la revendication 13, **caractérisé en ce que** la durée et l'amplitude des impulsions de courant cathodique sont choisies de façon à déclencher une décharge des capacités des doubles couches électrochimiques.

**15.** Procédé selon l'une des revendications précédentes, **caractérisé en ce que** pour chaque impulsion de courant la chute de tension à travers l'espace interélectrodes est mesurée, **en ce que** la résistance électrique de l'espace interélectrode est calculée et la variation de la résistance pour des impulsions de courant successives, de même direction, de même polarité est calculée et comparée à une valeur de consigne et en cas de dépassement vers le haut de la valeur de consigne la vitesse d'avance de l'électrode d'outil est diminuée et en cas de dépassement vers le bas de la valeur de consigne la vitesse d'avance de l'électrode d'outil est augmentée, moyennant quoi la variation est maintenue constante.

**16.** Procédé selon l'une des revendications précédentes, **caractérisé en ce qu'**en tant qu'électrolyte un électrolyte à un seul composant est utilisé.

Fig. 1

Fig. 2

**Fig. 3**

EP 1 714 725 B1

Fig. 4

15

**Fig. 5**

Fig. 6

Fig. 7

Fig. 8

**Fig. 9**

**EP 1 714 725 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5833835 A
- US 6402931 B
- US 5242556 A

- US 6231748 B
- US 4213834 A
- RU 2220031